# FASCICULE DE BREVET EUROPEEN

(11) **EP 0 907 550 B1**
(45) Date de publication et mention de la délivrance du brevet: **17.05.2000**
(21) Numéro de dépôt: 97931848.2
(22) Date de dépôt: 02.07.1997
(51) Int. Cl.: B62M 9/16

(54) **DISPOSITIF DE TENSION ET DE GUIDAGE D'UNE CHAINE POUR UN CHANGEMENT DE VITESSES DE VELO**
SPANN-UND FÜHRUNGSEINRICHTUNG FÜR KETTEN DER GANGSCHALTUNG FÜR FAHRRÄDER
TENSION AND GUIDING DEVICE OF A CHAIN FOR BICYCLE CHANGE SPEED GEAR

(30) Priorité: 03.07.1996 FR 9608493
(43) Date de publication de la demande: 14.04.1999
(73) Titulaire: Savard, Franck, F-22400 Planguenoual (FR)
(72) Inventeur: Savard, Franck, F-22400 Planguenoual (FR)
(74) Mandataire: Thébault, Jean-Louis
(86) Numéro de dépôt international: FR9701181
(87) Numéro de publication internationale: WO9801333

(56) Documents cités:
- EP-A- 0 585 472
- DE-A- 3 403 219
- US-A- 4 637 808

## Description

La présente invention concerne un dispositif de tension et de guidage d'une chaîne pour un changement de vitesses de vélo.

On connaît par la demande européenne EP-A-95450012.0 un procédé de sélection de développements ainsi que des moyens pour la mise en oeuvre de ce procédé, au nom du présent demandeur.

Cette innovation présente un très grand intérêt puisque l'utilisateur dispose d'une sélection croissante de développements déterminée, étagée en fonction des besoins, parmi un nombre de combinaisons beaucoup plus important mais dans lequel les redondances notamment sont nombreuses.

Pour atteindre ce nombre de combinaisons important, le vélo est généralement équipé de plusieurs plateaux, solidaires en rotation avec le pédalier, avec un dérailleur avant pour les sélectionner, de pignons solidaires de la roue arrière avec un dérailleur arrière pour les sélectionner également ainsi que d'une chaîne reliant les plateaux et les pignons.

L'invention qui consiste à sélectionner et à synchroniser des développements a pour conséquence également de limiter les croisements de chaîne en supprimant les croisements extrêmes correspondant au plus grand plateau avec le plus grand pignon ou au plus petit plateau avec le plus petit pignon. En effet, de telles combinaisons sont inutiles car des développements comparables peuvent être obtenus avec d'autres combinaisons moins gourmandes en longueur de chaîne.

Pour compenser les variations de longueur de chaîne, il est prévu un tendeur avec guidage sous forme d'une chape comprenant deux galets libres en rotation l'un de guidage/déraillage, l'autre de tension, équipés de dents prévues pour coopérer avec les maillons de la chaîne.

La chape est généralement montée à rotation à l'extrémité d'un bras monté lui même à rotation par rapport au cadre. Un ressort de rappel est interposé au droit de chaque axe de rotation en sorte d'exercer un effort ayant tendance à faire pivoter sur l'avant le bras tandis que la chape est rappelée vers l'arrière par rapport au bras. Ce montage permet un rattrapage maximum de longueur de chaîne sur le brin mou.

Cette double articulation permet de compenser de grandes variations de longueur de chaîne mais on peut aussi envisager le cas avec un bras qui n'est plus mobile mais fixe. On note qu'il faut dans tous les cas un galet tendeur mobile.

Entre le bras et la chape, de façon connue est actuellement interposé un parallélogramme déformable qui déplace cette chape en translation, perpendiculairement au plan du vélo, en sorte de guider la chaîne et de provoquer son déraillage et le passage d'un pignon à un autre.

Si ce type de dérailleur donne satisfaction sur le principe, il n'en reste pas moins que cet élément prend de la place et diminue la garde au sol, le rendant vulnérable, surtout dans les applications tout terrain.

De plus, il est envisagé de mettre dans un carter l'ensemble de l'entraînement, c'est-à-dire la chaîne, le dérailleur arrière et le dérailleur avant.

Le carter peut être étanche et contenir un lubrifiant qui, non seulement diminuera les frottements et facilitera les changements de développement, mais protégera les organes fragiles mécaniquement.

Le rendement sera amélioré par le fait même que lors de sorties ou de compétitions, la boue, l'eau et les autres particules ne pourront plus s'accumuler en des endroits susceptibles d'entraver le bon fonctionnement de la transmission.

Par contre, on comprend que, dans le cas des dérailleurs de l'art antérieur, la mise sous carter est irréaliste puisqu'il faudrait prévoir le volume correspondant à l'extension maximale de la chape.

La présente invention se propose de pallier les inconvénients de l'art antérieur en proposant un dispositif de tension et de guidage de chaîne qui permet le déraillage de la chaîne, la tension mais qui est d'un encombrement réduit, qui autorise la mise sous carter, qui est adaptable sur les vélos existants moyennant de très faibles modifications, et qui conduit à une augmentation de la garde au sol.

A cet effet, le dispositif de tension et de guidage/déraillage d'une chaîne d'un système d'entraînement à un jeu de pignons (***a-h***) et également un jeu de plateaux (***A,B,C***), pour un vélo comprenant un moyen de sélection synchronisée d'un nombre limité de couples plateau/pignon, comportant un dérailleur arrière et un dérailleur avant, ledit dérailleur arrière comportant un bras et une chape montée à rotation par rapport au bras avec un moyen élastique de rappel interposé, ladite chape comprenant un galet de guidage/déraillage et un galet tendeur, caractérisé en ce que la chaîne passe sous le pignon de guidage/déraillage et au-dessus du pignon tendeur, le moyen de rappel de la chape tendant à ramener cette chape vers l'avant et vers le haut.

Selon une autre caractéristique, le bras est monté à rotation par rapport au vélo avec également un moyen élastique de rappel interposé entre ce bras et le vélo, le moyen de rappel élastique ayant tendance à ramener le bras vers le bas et vers l'arrière.

Le rapport des puissances des éléments élastiques de rappel est tel que le bras est amené à se déplacer d'arrière vers l'avant et de bas vers le haut.

Dans le cas d'une variante, le bras est monté libre ou fixe en rotation par rapport au vélo, seul le moyen élastique interposé entre la chape et le bras assurant le positionnement de la chape.

Selon une autre caractéristique, la chape portant les galets de tension et de guidage/déraillage est sensiblement toujours au-dessus de la ligne ***L*** tangente au plus grand plateau et au plus grand pignon.

Une variante intéressante de l'invention prévoit des moyens tendeur complémentaires, par exemple un bras articulé par rapport à la chape avec un galet libre en rotation et un moyen de rappel élastique interposé entre la chape et ce bras complémentaire.

Il est aussi possible de disposer un carter de protection, étanche, disposé autour de l'ensemble plateaux/pignons/chaîne et des deux dérailleurs.

La présente invention est décrite ci-après, selon un mode de réalisation particulier représenté de façon schématique sur les dessins annexés, dessins sur lesquels les différentes figures montrent :
- figure 1A, une vue schématique d'un dispositif de transmission chaîne/plateaux/pignons de l'art antérieur , dans la position dans laquelle le brin mou est court, libérant la quasi totalité de la chaîne,
- figure 1B, une vue identique à celle de la figure 1A mais dans la position dans laquelle le brin mou est long, reprenant une grande partie de la chaîne,
- figure 2A, une vue du dispositif de guidage et de tension selon la présente invention, dans la position dans laquelle le brin mou est court, libérant la totalité de la chaîne correspondant à une longueur moindre, et
- figure 2B, une vue identique à celle de la figure 2A mais avec une reprise de la chaîne en excès, le brin mou étant long.

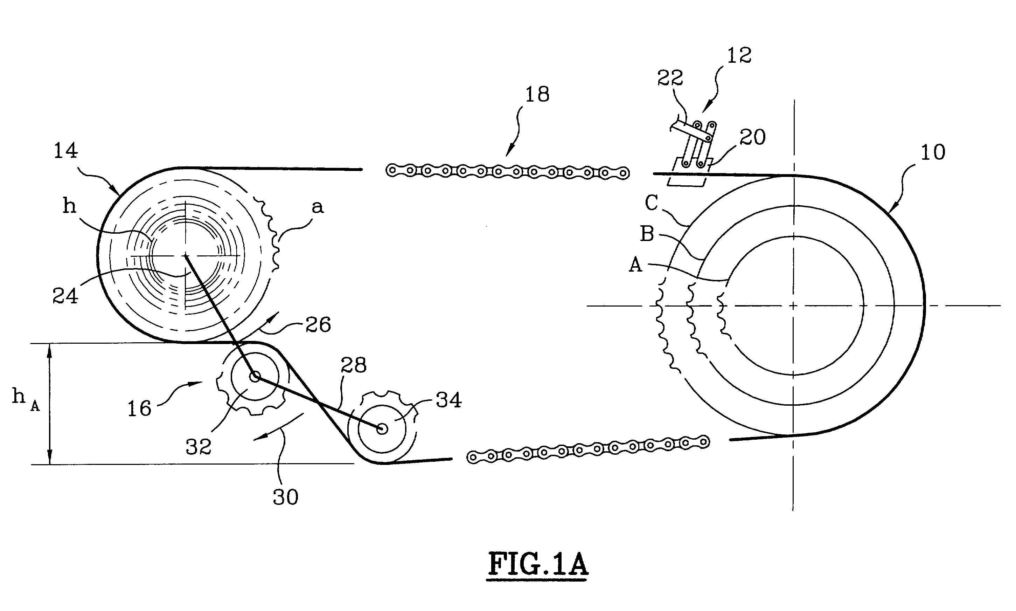

Sur la figure 1A, on a représenté un jeu de plateaux 10 à l'avant avec un dérailleur 12, un jeu de pignons 14 à l'arrière avec un dérailleur 16, une chaîne 18 de transmission engrenant avec les plateaux et les pignons.

Le jeu de plateaux comprend trois plateaux ***A,B,C*** du plus petit au plus grand et le jeu de pignons comprend huit pignons ***a-h*** du plus grand au plus petit, le petit plateau ***A*** étant proche du plan médian du vélo, et le grand pignon ***a*** étant proche également du plan médian du vélo, vers l'intérieur.

Le dérailleur avant 12 est de type connu et comprend une chape 20 mobile de façon curviligne grâce à une interposition d'un parallélogramme déformable 22, l'ensemble étant symbolisé puisqu'il ne s'agit pas de l'invention. Le but est d'obtenir un déplacement sensiblement perpendiculaire au plan du vélo pour permettre le passage de la chaîne d'un plateau au plateau adjacent.

Le dérailleur arrière 16 comprend, dans le mode de réalisation représenté, un bras 24 du type parallélogramme déformable, mobile en rotation autour de son axe de liaison au vélo, avec un moyen élastique de rappel ayant tendance à faire tourner ce bras dans le sens de la flèche 26.

Une chape 28 est montée à rotation à l'extrémité libre du bras 24 avec interposition d'un moyen élastique de rappel ayant tendance à faire tourner la chape 28 dans le sens de la flèche 30.

La chape comprend un galet 32 de guidage/déraillage et un galet 34 de tension, la chaîne circulant au-dessus du galet 32 de guidage/déraillage et sous le galet 34 de tension.

Dans le cas représenté sur la figure 1A, la chaîne 18 est positionnée sur le plus grand plateau ***C*** et sur le plus grand pignon ***a***, ce qui nécessite la plus grande longueur de chaîne, le brin mou est au plus court.

Dans ce cas, la chaîne 18 décrit sensiblement un ovale entre les plateaux et les pignons, les galets provoquant la plus petite déformation possible de la chaîne.

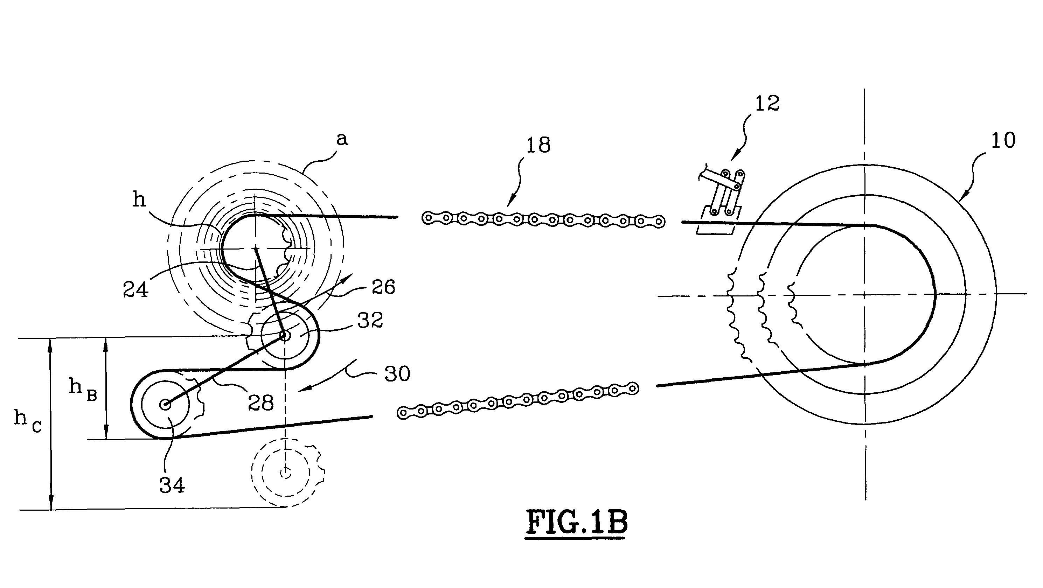

Dans le cas représenté sur la figure 1B, la chaîne est sur le plus petit plateau ***A*** et le plus petit pignon ***h**,* si bien qu'il convient de reprendre la longueur de chaîne en trop. Dans ce cas, le parallélogramme remonte légèrement perpendiculairement au plan du vélo lorsqu'il est déplacé jusqu'au petit pignon, et le ressort tend dans le sens de la flèche 26.

La chape, quant à elle, est ramenée vers l'arrière suivant la flèche 30, sous l'effet du moyen de rappel élastique ce qui oblige la chaîne à circuler suivant un profil en ***S*** très prononcé, assurant ainsi la tension et le rattrapage de longueur de chaîne libre, sur le brin mou.

On constate que la hauteur h_{A} et h_{B} sous le plus grand pignon ***a*** est relativement importante et que la chape 28 est très exposée, et de la même façon, le dérailleur complet est aussi très exposé.

Bien entendu, des phases intermédiaires, représentées en trait mixte ***hc,*** conduisent à des situations extrêmes encore plus défavorables dans lesquelles le galet tendeur se trouve aligné verticalement avec le galet de guidage/déraillage

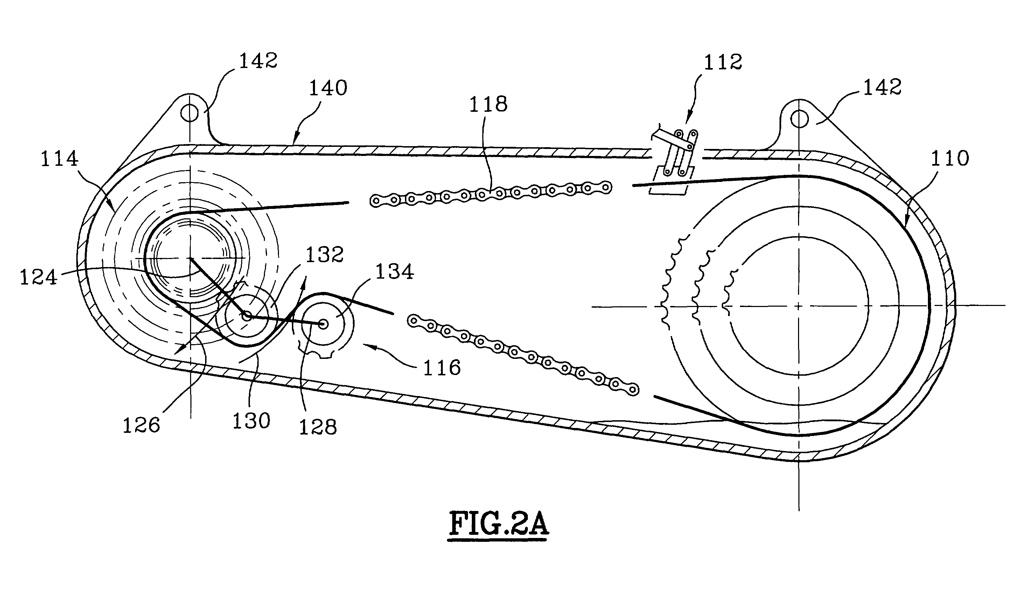

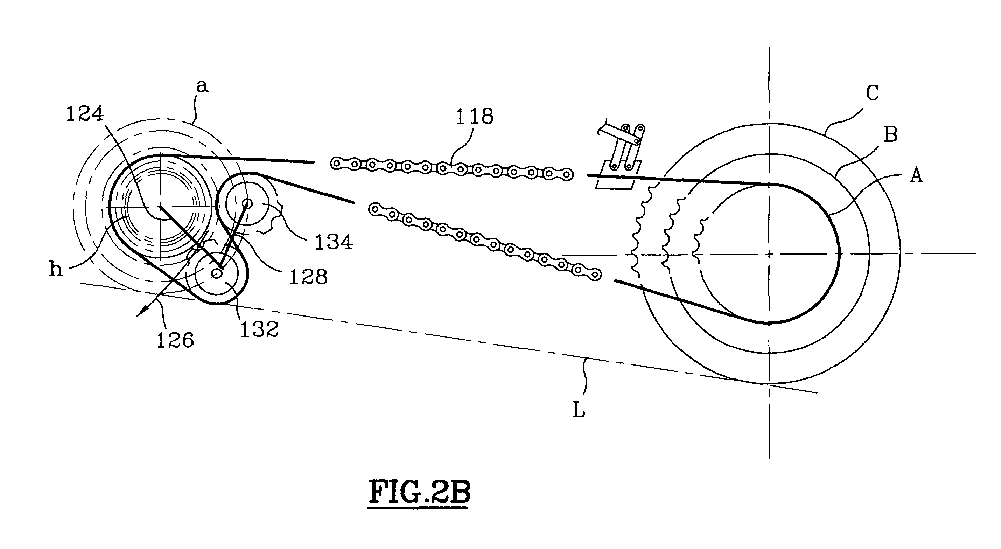

Sur les figures 2A et 2B, les références des éléments semblables sont identiques mais augmentées de 100.

Ainsi, sur la figure 2A on remarque la disposition de la chaîne 118 qui se trouve sur le plateau de plus grand diamètre ***C*** et sur le pignon moyen qui est l'une des positions extrêmes correspondant au développement donnant le plus petit brin mou. On a bien indiqué en préambule que la position de la figure 1A ne pouvait en aucun cas être atteinte dans le cas de la figure 2A, ce qui a permis de réduire la longueur de chaîne.

Sur la figure 2B, le développement est un développement également intermédiaire mais c'est celui qui correspond à la longueur de brin mou la plus longue et à la reprise de longueur de chaîne la plus importante. En effet, le développement le plus petit qui serait le plus petit plateau ***A*** avec le plus grand pignon ***a***, correspond à une moindre reprise de longueur de chaîne.

Par contre, le développement correspondant au plus petit plateau ***A*** et au plus petit pignon ***h***, qui est sensé demander la reprise de chaîne la plus grande n'est jamais atteint puisqu'il s'agit d'une redondance exacte ou approchée avec un croisement de chaîne rédhibitoire.

On remarque sur ces deux figures que le dérailleur comprend un bras 124 qui est aussi dans ce cas un parallélogramme déformable comme les dérailleurs de l'art antérieur mais plus court car la longueur de reprise est moins importante, de même pour la chape 128.

L'articulation du bras qui est indiquée dans le mode représenté, centré sur le moyeu, peut être disposé en tout autre endroit.

Dans la cas présenté, le moyen élastique de rappel tend à faire tourner le bras dans le sens inverse de celui des figures 1A et 1B, c'est-à-dire vers l'arrière.

Une chape 128 est articulée par rapport au bras 124 mais le moyen de rappel élastique assure une rotation de la chape vers l'avant, dans le sens inverse de celui des figures 1A et 1B.

La chape comprend de la même façon un galet de guidage/déraillage 132 et un galet de tension 134.

Par contre, le montage à chape renversée nécessite une circulation modifiée de la chaîne, c'est-à-dire que la chaîne passe sous le galet de guidage/déraillage et au-dessus du galet de tension, ce qui est l'essence même de la présente invention.

On constate dès lors que l'encombrement du dérailleur est réduit et que sa garde au sol est augmentée dans de fortes proportions. En effet, la chape reste sensiblement au-dessus d'une ligne ***L*** tangente inférieure au plus grand plateau C et au plus grand pignon ***a***.

On peut noter que le bras 124 est équipé d'un moyen élastique de rappel qui le ramène vers le bas et vers l'arrière, néanmoins on peut prévoir un bras fixe et seul le galet tendeur reste mobile en rotation oscillante.

On peut aussi étudier les puissances respectives des deux moyens élastiques de rappel pour que leur constante élastique de rappel permette la tension de la chaîne mais dans ce cas, le bras 124 peut être amené à pivoter dans l'un ou l'autre sens de rotation.

Selon une autre variante, le bras 124 est monté libre en supprimant le moyen élastique de rappel, seul le galet tendeur et son moyen élastique de rappel assurant le positionnement de la chape.

Sur la figure 2A, on a même disposé un carter 140 de protection qui autorise une lubrification permanente en bain d'huile par exemple de l'ensemble des pièces tournantes, en plus de la protection purement mécanique et une moindre vulnérabilité aux chocs.

Dans ce cas, le carter est fixé au vélo, plus particulièrement au cadre, par des pattes 142. Ce type de dispositif est applicable aux vélos à suspension arrière car le carter devient un élément d'articulation

On note la garde au sol importante même en présence du carter.

Selon un autre perfectionnement, il est possible d'adjoindre des moyens tendeur complémentaires, par exemple sous la forme d'un galet libre en rotation sur un bras articulé par rapport à la chape avec interposition d'un moyen élastique de rappel. Ainsi la chaîne circule sous le premier galet, au-dessus du deuxième galet et sous le troisième galet.

Le dispositif qui vient d'être décrit ne se comprend particulièrement qu'avec un dispositif de changement de vitesses qui n'utilise qu'un nombre partiel de combinaisons synchronisées, afin de limiter les croisements de chaîne trop prononcés et les écarts trop importants de longueur utile du brin mou.

On peut noter à nouveau que l'ensemble de la description a été réalisé à partir des dérailleurs à parallélogramme déformables car il s'agit là du type de dérailleur le plus commun à ce jour mais le dispositif selon la présente invention est aussi applicable à tout autre dérailleur dont il faut compenser les variations de longueur de chaîne utile.

On peut noter aussi que sur la figure 1B la longueur de brin mou, inférieur, est beaucoup plus longue que l'entrave des plateaux et pignons or cette position correspond à des développements courts, généralement utilisés en terrain difficile et accidenté, ce qui est préjudiciable à une bonne tenue de la chaîne. En effet un tel flottement conduit à de nombreux autres inconvénients bien connus des utilisateurs.

Sur la figure 2B, la longueur de brin mou est considérablement réduite ce qui pallie bien les inconvénients évoqués ci-avant tout en générant d'autres avantages comme la mise sous carter.

## Revendications

1. Dispositif de tension et de guidage/déraillage d'une chaîne (118) d'un système d'entraînement avec un jeu de pignons (***a-h***) et également un jeu de plateaux (***A,B,C***), pour un vélo comprenant de préférence un moyen de sélection synchronisée d'un nombre limité de couples plateau/pignon, comportant un dérailleur arrière (116) et un dérailleur avant (112), ledit dérailleur arrière comportant un bras (124) et une chape (128) montée à rotation par rapport au bras avec un moyen élastique de rappel interposé, ladite chape comprenant un galet de guidage/déraillage (132) et un galet tendeur (134), caractérisé en ce que la chaîne (118) passe sous le pignon de guidage/déraillage (132) et au-dessus du pignon tendeur (134), le moyen de rappel de la chape tendant à ramener cette chape vers l'avant et vers le haut.

2. Dispositif de tension et de guidage/déraillage selon la revendication 1, caractérisé en ce que le bras (124) est monté à rotation par rapport au vélo avec également un moyen élastique de rappel interposé entre ce bras et le vélo, le moyen de rappel élastique ayant tendance à ramener le bras vers le bas et vers l'arrière.

3. Dispositif de tension et de guidage/déraillage selon la revendication 2, caractérisé en ce que le rapport de puissance des moyens élastiques de rappel est tel que le bras (124) pivote de l'arrière vers l'avant et du bas vers le haut.

4. Dispositif de tension et de guidage/déraillage selon la revendication 1, caractérisé en ce que le bras (124) est monté libre en rotation par rapport au vélo, seul le moyen élastique interposé entre la chape et le bras assurant le positionnement de la chape.

5. Dispositif de tension et de guidage/déraillage selon la revendication 1, caractérisé en ce que le bras (124) est monté fixe en rotation par rapport au vélo, seul le moyen élastique interposé entre la chape et le bras assurant le positionnement de la chape

6. Dispositif de tension et de guidage/déraillage selon l'une quelconque des revendications précédentes, caractérisé en ce que la chape portant les galets de tension et de guidage/déraillage est sensiblement toujours au-dessus de la ligne ***L*** tangente au plus grand plateau ***A*** et au plus grand pignon ***a***.

7. Dispositif de tension et de guidage/déraillage selon l'une quelconque des revendications précédentes, caractérisé en ce qu'il comprend des moyens tendeur complémentaires.

8. Dispositif de tension et de guidage/déraillage selon la revendication 7, caractérisé en ce que les moyens tendeur complémentaires comprennent un bras articulé par rapport à la chape avec un galet libre en rotation et un moyen de rappel élastique interposé entre la chape et ce bras complémentaire.

9. Dispositif de tension et de guidage selon l'une quelconque des revendications précédentes, caractérisé en ce qu'il comprend un carter (140) de protection, étanche, disposé autour de l'ensemble plateaux/pignons/chaîne et des deux dérailleurs (112, 116).

## Claims

1. Tension and guidance/derailleur device for a chain (118) on a drive system with a set of gears (a-h) and also a set of sprockets (A, B, C), for a bicycle comprising preferably a means for the synchronised selection of a limited number of sprocket/gear pairs, having a rear derailleur (116) and a front derailleur (112), said rear derailleur having an arm (124) and a cage (128) mounted for rotation with respect to the arm with an elastic return means interposed, said cage comprising a guidance/derailleur wheel (132) and a tensioning wheel (134), characterised in that the chain (118) passes underneath the guidance/derailleur gear (132) and over the tensioning gear (134), the cage return means tending to return this cage forwards and upwards.

2. Tension and guidance/derailleur device according to Claim 1, characterised in that the arm (124) is mounted for rotation with respect to the bicycle with also an elastic return means interposed between this arm and the bicycle, the elastic return means having a tendency to return the arm downwards and towards the rear.

3. Tension and guidance/derailleur device according to Claim 2, characterised in that the power ratio of the elastic return means is such that the arm (124) pivots from the rear towards the front and from the bottom towards the top.

4. Tension and guidance/derailleur device according to Claim 1, characterised in that the arm (124) is mounted so as to rotate freely with respect to the bicycle, only the elastic means interposed between the cage and the arm providing the positioning of the cage.

5. Tension and guidance/derailleur device according to Claim 1, characterised in that the arm (124) is mounted so as to be fixed with respect to rotation with respect to the bicycle, only the elastic means interposed between the cage and the arm providing the positioning of the cage.

6. Tension and guidance/derailleur device according to any one of the preceding claims, characterised in that the cage carrying the tension and guidance/derailleur wheels is substantially always above the line l tangent to the largest sprocket A and to the largest gear a.

7. Tension and guidance/derailleur device according to any one of the preceding claims, characterised in that it comprises supplementary tensioning means.

8. Tension and guidance/derailleur device according to Claim 7, characterised in that the supplementary tensioning means comprise an arm articulated with respect to the cage with a wheel rotating freely and an elastic return means interposed between the cage and this supplementary arm.

9. Tension and guidance device according to any one of the preceding claims, characterised in that it comprises a sealed protective casing (140) disposed around the sprocket/gear/chain assembly and the two derailleurs (112, 116).

## Patentansprüche

1. Spann- und Führungs-/Schaltungsvorrichtung einer Kette (118) eines Antriebssystems mit einem Satz hinterer Kettenzahnräder (a-h) und weiter einem Satz vorderer Kettenräder (A,B,C) für ein Fahrrad, das vorzugsweise ein Mittel zur synchronisierten Auswahl aus einer begrenzten Anzahl von Kettenrad/Kettenzahnrad-Paaren umfaßt, wobei die Vorrichtung eine hintere Gangschaltung (116) und eine vordere Gangschaltung (112) beinhaltet, wobei die hintere Gangschaltung einen Arm (124) und eine Gabel (128) umfaßt, die am Arm über ein zwischengeschaltetes elastisches Rückstellmittel drehbar montiert ist, wobei die Gabel ein Führungs-/Schaltrad (132) und ein Spannrad (134) umfaßt, **dadurch gekennzeichnet**, daß die Kette (118) unterhalb des Führungs-/Schaltzahnrads (132) und oberhalb des Spannzahnrads (134) geführt ist, wobei das Rückstellmittel für die Gabel dazu neigt, diese Gabel nach vorne und nach oben zu stellen.

2. Spann- und Führungs-/Schaltungsvorrichtung gemäß Anspruch 1, dadurch gekennzeichnet, daß der Arm (124) im Bezug auf das Fahrrad zusammen mit einem zwischen diesem Arm und dem Fahrad angeordneten elastischen Rückstellmittel drehbar angeordnet ist, wobei das elastische Rückstellmittel die Tendenz hat, den Arm abwärts und rückwärts zurückzustellen.

3. Spann- und Führungs-/Schaltungsvorrichtung gemäß Anspruch 2, dadurch gekennzeichnet, daß das Kräfteverhältnis von elastischen Rückstellmitteln derart ist, daß der Arm (124) von hinten nach vorne und von unten nach oben schwenkt.

4. Spann- und Führungs-/Schaltungsvorrichtung gemäß Anspruch 1, dadurch gekennzeichnet, daß der Arm (124) in Bezug auf das Fahrrad frei drehbar angeordnet ist, wobei allein das zwischengeschaltete elastische Mittel zwischen der Gabel und dem Arm die Positionierung der Gabel sichert.

5. Spann- und Führungs-/Schaltungsvorrichtung gemäß Anspruch 1, dadurch gekennzeichnet, daß der Arm (124) mit dem Fahrrad drehbar angeordnet ist, wobei allein das zwischengeschaltete elastische Mittel zwischen der Gabel und dem Schenkel die Positionierung der Gabel sichert.

6. Spann- und Führungs-/Schaltungsvorrichtung gemäß einem der vorhergehenden Ansprüche, dadurch gekennzeichnet, daß die Gabel die Spann und die Führungs-/Schaltrollen immer im wesentlichen oberhalb der Tangentenlinie L an das größte Kettenrad A und das größte Kettenzahnrad a trägt.

7. Spann- und Führungs-/Schaltungsvorrichtung gemäß einem der vorhergehenden Ansprüche, dadurch gekennzeichnet, daß sie ergänzende Spannmittel umfaßt.

8. Spann- und Führungs-/Schaltungsvorrichtung gemäß Anspruch 7, dadurch gekennzeichnet, daß die ergänzenden Spannmittel einen an der Gabel angelenkten Arm mit einer frei drehbaren Rolle und einem zwischen der Gabel und dem zusätzlichen Arm geschalteten elastischen Mittel umfassen.

9. Spann- und Führungs-/Schaltungsvorrichtung gemäß einem der vorhergehenden Ansprüche, dadurch gekennzeichnet, daß sie einen dichten Spritzschutz (140), der um den Aufbau aus Kettenrädern / Kettenzahnrädern / Kette und zwei Gangschaltungen (112, 116) herum angeordnet ist, umfaßt.
